(19) Europäisches Patentamt
European Patent Office
Office européen des brevets

(11) Veröffentlichungsnummer: **0 104 597**
A2

# (12) EUROPÄISCHE PATENTANMELDUNG

(21) Anmeldenummer: 83109366.1

(22) Anmeldetag: 21.09.83

(51) Int. Cl.³: **C 04 B 43/02**

(30) Priorität: 23.09.82 DE 3235294

(43) Veröffentlichungstag der Anmeldung:
04.04.84 Patentblatt 84/14

(84) Benannte Vertragsstaaten:
AT BE CH DE FR IT LI NL

(71) Anmelder: Grünzweig + Hartmann und Glasfaser AG
Bürgermeister-Grünzweig-Strasse 1-47
D-6700 Ludwigshafen am Rhein(DE)

(72) Erfinder: Sommer, Rolf
Mutterstadter Strasse 5
D-6701 Dannstadt(DE)

(54) **Mineralfaserdämmkörper, insbesondere Formteil, aus mit Bindemittel gebundenen Mineralfasern, sowie hiermit hergestelltes topfförmiges Teil, Verbundbauteil und hieraus hergestellte Mineralfaserdämmschale.**

(57) Bei Mineralfaserdämmkörpern (21) aus gebundenen Mineralfasern in Filz- oder Plattenkonsistenz oder in Schalenform, die eine gewisse, zum Teil erhebliche Kompressibilität besitzen, werden Vertiefungen (23) zur Vermeidung einer arbeits- und insbesondere abfallintensiven Materialabnahme dadurch erzeugt, daß im Randbereich der vorgesehenen Vertiefung (23) ein Einschnitt (26) eingebracht wird, der zumindest bis in die vorgesehene Tiefe der Vertiefung (23) geführt ist, und sodann das so örtlich von Umgebungsmaterial getrennte Material zur Bildung der Vertiefung (23) eingedrückt oder komprimiert wird. Die Schnittrichtung und Kompressionsrichtung liegt dabei zweckmäßig quer zur Orientierungshauptrichtung der Mineralfasern, was sich bei den meisten Mineralfaserteilen problemlos verwirklichen läßt. Die Vorbereitung der Erzeugung einer Vertiefung (23) durch den Einschnitt (26) ergibt auch keinerlei Änderung des Wärme- oder Schalldämmverhaltens des Mineralfaserdämmkörpers (21) in diesem Bereich, so daß entsprechende Einschnitte (26) beispielsweise durch Stanzen auch dann eingebracht werden können, wenn lediglich eine Möglichkeit zur Bildung einer Vertiefung (23) an dieser Stelle besteht. Weiterhin kann eine Vielzahl von Einschnitten in einem geeigneten vorgegebenen Muster eingebracht werden, so daß bei unterschiedlichen Einsatzfällen desselben Teiles selektiv immer nur einzelne der Musterfelder tatsächlich zur Bildung von Vertiefungen genutzt werden können. Besondere Vorteile ergeben sich durch die Anpassungsfähigkeit von Mineralfaserdämmschalen an wechselnde Durchmesser der aufzunehmenden Leitungen etwa im Bereich von Armaturen oder Verbindungsstücken.

_Fig. 1_

0104597

Grünzweig + Hartmann und Glasfaser AG, 6700 Ludwigshafen

---

Mineralfaserdämmkörper, insbesondere Formteil, aus mit Bindemittel gebundenen Mineralfasern, sowie hiermit hergestelltes topfförmiges Teil, Verbundbauteil und hieraus hergestellte Mineralfaserdämmschale

---

Die Erfindung betrifft einen Mineralfaserdämmkörper, insbesondere ein Formteil, aus mit Bindemittel gebundenen Mineralfasern in Filz- oder Plattenkonsistenz oder in Schalenform, nach dem Oberbegriff des Anspruchs 1, sowie hiermit oder hieraus hergestellte Produkte in Form eines topfförmigen Teiles nach dem Oberbegriff des Anspruchs 5, eines Verbundbauteiles nach dem Oberbegriff des Anspruchs 7 und einer Mineralfaserdämmschale nach dem Oberbegriff des Anspruchs 9.

Mineralfaserprodukte zur Schall- und/oder Wärmedämmung werden überwiegend als Bahnen, Platten oder Schalen hergestellt. Für viele Anwendungsgebiete sind diese Produkte auch gut geeignet, da zu ihrer Verwendung allenfalls ein Zuschnitt erforderlich ist. Sollen jedoch damit unebene Flächen oder komplizierte Körper gedämmt werden, so ist gegebenenfalls erheblicher Aufwand erforderlich, um diese Produkte an die gewünschte Form anzupassen. Um Dichtheit zu erreichen und Wärme- oder Schallbrücken zu vermeiden, wird deshalb häufig mit mehrlagigen Dämmschichten gearbeitet, um an Stoßstellen entsprechende Überlappungen zu erhalten, oder es wird beispielsweise durch Fräsen ein Stufenfalz in eine einlagige Dämmschicht eingebracht. Für komplizierte Körper und Flächen werden häufig Formteile erforderlich, die als Pressteile hergestellt werden und so erhebliche Formkosten erfordern. Soweit Vertiefungen zur Formanpassung durch Herausnahme von Mineralfasermaterial an der Stelle der Vertiefung beispielsweise durch Fräsen geschaffen werden, ist Materialverlust unvermeidlich. Abgesehen von ihrer Abfallintensität erfordert eine solche Materialabnahme darüber hinaus Arbeitsaufwand und spezielles Werkzeug, so daß sie nur im Hersteller- oder Konfektionierbetrieb durchführbar ist und zu einer Verteuerung des Produkts führt.

Im Falle von Mineralfaserschalen, die durch Wicklung der Mineralfasern hergestellt werden und daher eine in Umfangsrichtung der Schale liegende Orientierungshauptrichtung der Fasern besitzen, werden insbesondere am Innenumfang kaum jemals besondere Bearbeitungen für eine Anpassung der Form etwa an Leitungsarmaturen oder dergleichen vorgenommen. Derartige Bearbeitungen sind wegen der schlechten Zugänglichkeit des Innenumfangs besonders aufwendig und deswegen selten rationell, weil die besonderen Formerfordernisse im Bereich einer Armatur oder dergleichen im Anwendungsfall zum Zeitpunkt der Herstellung der Mineralfaserschale in aller Regel nicht bekannt sind. Daher werden in der Praxis Mineralfaserschalen nur in glatten, problemlosen Bereichen einer Rohrleitung eines bestimmten Durchmessers verwendet und enden, sobald in der Leitungsführung irgendeine Unstetigkeit auftritt, die nicht gedämmt oder ohne Verwendung von Mineralfaserschalen gedämmt wird. Weiterhin ist auch ohne Unstetigkeiten in der Leitungsführung eine bestimmte vorgefertigte Mineralfaserschale nur für einen bestimmten Leitungsdurchmesser geeignet, so daß eine sehr große Vielzahl von Schalen mit unterschiedlichen Innen- und gegebenenfalls auch Außendurchmessern vorgefertigt und auf Lager gehalten werden muß.

Demgegenüber liegt der Erfindung die Aufgabe zugrunde, einen Wärmedämmkörper der im Oberbegriff des Anspruchs 1 angegebenen Gattung sowie spezielle, hiermit oder hieraus hergestellte Produkte nach dem Oberbegriff der Ansprüche 5, 7 und 9 zu schaffen, bei denen für viele Anwendungsfälle auf einfache Weise und ohne Materialverlust eine Anpassung an die Abmessungen und Formen von im Einzelfall zu dämmenden Flächen oder Körpern erfolgen kann.

Die Lösung dieser Aufgabe erfolgt durch die kennzeichnenden Merkmale des Anspruchs 1 bzw. durch die kennzeichnenden Merkmale der Ansprüche 5, 7 und 9.

Damit wird der für die Bildung der Vertiefung vorgesehene Materialbereich durch einen oder mehrere Einschnitte gegenüber dem Umgebungsmaterial abgegrenzt und gegebenenfalls in seiner Komprimierbarkeit verbessert sowie über die Tiefe der vorgesehenen Vertiefung abgetrennt, so daß das so abgetrennte Material im Bereich der vorgesehenen Vertiefung zu deren Bildung ganz einfach komprimiert werden kann. Hierfür sind nur relativ geringe Kräfte erforderlich, abhängig natürlich von der Konsistenz des Mineralfasermaterials, da die verformende Einwirkung durch die Einschnittbegrenzung tatsächlich auf den begrenzten Bereich der Vertiefung beschränkt bleibt und gegebenenfalls durch zusätzliche innere Einschnitte insbesondere bei großflächigen Vertiefungen in Schalenoberflächen erleichtert wird. Weiterhin ergibt sich bei Bedarf eine scharf abgegrenzte Vertiefung ohne irgendwelche verformenden Einwirkungen auf die benachbarten Materialbereiche, da die Einschnittbegrenzung der Vertiefung eine verformende Mitnahme umgebender Materialbereiche verhindert. Derartige umgebende Materialbereiche können jedoch bei Bedarf separat verformt werden, gegebenenfalls in unterschiedlichem Umfang, wobei Wechselwirkungen durch die Einschnittbegrenzungen zwischen den einzelnen Materialbereichen ausgeschlossen sind. Im Grunde der Vertiefung liegt das Mineralfasermaterial dann gegenüber dem Ausgangsmaterial verdichtet vor, was bei gewissen Anwen-

4

dungsfällen vorteilhaft ist. Weiterhin neigt das komprimierte Mineralfasermaterial am Grund der Vertiefung zur Rückfederung, was ebenfalls häufig, etwa zur Erzielung einer dichten Anlage auch bei Maßungenauigkeiten, erwünscht ist.

Vorteilhaft verläuft der Einschnitt gemäß Anspruch 2 quer zur Orientierungshauptrichtung der Fasern. Damit wird erreicht, daß die Kompression des Mineralfasermaterials überwiegend durch gegenseitige Annäherung benachbart liegender Fasern und nur zu einem geringeren Teil durch Knickbelastung und damit Bruch von in Belastungsrichtung liegenden Fasern erfolgt. Da derartige Mineralfaserprodukte in der Regel parallel zur Oberfläche orientierte Fasern aufweisen, bereitet die Verwirklichung dieser Maßnahme in der Regel dann keinerlei zusätzliche Probleme, wenn der Einschnitt von der Oberfläche aus senkrecht in das Material hinein verläuft, was wiederum für die meisten Anwendungsfälle der Regelfall ist.

Gemäß Anspruch 3 wird bevorzugt der Einschnitt bis in eine gegenüber der Tiefe der zu erzeugenden Vertiefung größere Tiefe geführt. Hierdurch wird einerseits die Herstellung einer Lagervertiefung variabler Tiefe je nach den Gegebenheiten des Einzelfalles problemlos ermöglicht, da auch in Fällen etwas größerer Tiefe keine Behinderung der Kompressionsbewegung durch die Haltewirkung benachbarter, nicht abgetrennter Materialanteile zu befürchten ist. Zum anderen ergibt eine solche tiefere Führung des Schnittes auch im Bereich des Bodens der Vertiefung eine vollständigere Abtrennung des insbesondere komprimierten Materials vom Umgebungsmaterial, so daß vermieden ist, daß im Abstand vom Boden der Vertiefung angegeordnetes, jedoch der Kompression ausgesetztes Material umgebende Materialteile mitzunehmen sucht und so der Kompression zusätzlichen Wider-

5

stand entgegensetzt.

Die Einschnitte können problemlos maschinell im Zuge der Fertigung oder auch im Rahmen einer späteren Konfektionierung unter Berücksichtigung der Verhältnisse des Einzelfalles etwa von Hand mit einem Messer eingebracht werden. Ein herstellerseitig mit einem Einschnitt versehener Mineralfaserdämmkörper ist auch dann, wenn am Einschnitt tatsächlich keine Vertiefung erzeugt wird, funktionell voll einsatzfähig, da die Schnitte äußerst schmal, optisch kaum sichtbar gehalten werden können und mit ihrer Einbringung keine Entfernung von Mineralfasermaterial an dieser Stelle einhergeht. Dieser gegenüber einem Herausfräsen oder dergleichen zusätzliche Vorteil der Erfindung kann gemäß Anspruch 4 insbesondere auch dazu genutzt werden, herstellerseitig eine Mehrzahl oder Vielzahl von Einschnitten an Stellen einzubringen, an denen nur eine Möglichkeit für eine spätere Notwendigkeit der Bildung einer Vertiefung besteht. So können die Einschnitte nach einem bestimmten Muster, etwa in parallelen Reihen oder in einem Rechteckmuster, eingebracht werden, und können im Gebrauch selektiv diejenigen Felder zwischen den Einschnitten durch Kompression zur Bildung einer Vertiefung verformt werden, an denen dies erforderlich ist, während andere Felder trotz der dort vorliegenden Einschnitte von Verformungen unberührt bleiben. Damit läßt sich eine Begrenzung der Typen bei einer Vorratshaltung auf einige bestimmte Muster, bestimmte Einschnittabstände oder bestimmte Gitterweiten oder dergleichen erzielen, und wird für den jeweils variablen Einsatzfall lediglich ausgewählt, welches der vorgefertigten Muster den Bedürfnissen des Einsatzfalles am besten gerecht wird.

Die Unteransprüche 6, 8 und 10 haben vorteilhafte Weiterbildungen des topfförmigen Teiles gemäß Anspruch 5 bzw. des Verbundbauteiles gemäß Anspruch 7 bzw. der Wärmedämmschale gemäß Anspruch 9 zum Inhalt.

6

Weitere Einzelheiten, Merkmale und Vorteile der Erfindung ergeben sich aus der nachfolgenden Beschreibung von Ausführungsformen anhand der Zeichnung.

Es zeigt

Fig. 1    einen erfindungsgemäßen Mineralfaserdämmkörper in Form einer Dämmplatte in einem Ausriß im Schnitt,

Fig. 2    den Mineralfaserdämmkörper gemäß Fig. 1 in seiner Einbaustellung unter Bildung einer Vertiefung,

Fig. 3    ein Verbundbauteil zur Wärmedämmung eines Wärmespeichergerätes in einem Schnitt, wie es dem Stand der Technik entspricht,

Fig. 4    eine Fig. 3 entsprechende Darstellung einer Weiterentwicklung des Verbundbauteiles gemäß Fig. 3, wie sie ebenfalls dem Stand der Technik entspricht,

Fig. 5    eine den Fig. 3 und 4 entsprechende Darstellung der erfindungsgemäßen Ausbildung eines entsprechenden Verbundbauteiles,

Fig. 6    einen Schnitt durch einen erfindungsgemäßen Mineralfaserdämmkörper zur Bildung eines topfförmigen Teiles,

Fig. 7    in schematisch vereinfachter Darstellung das topfförmige Teil mit dem Mineralfaserdämmkörper gemäß Fig. 6 in einer Fig. 6 entsprechenden Darstellung,

Fig. 8    zwei Mineralfaserdämmkörper in Plattenform

0104597

7

zur Dämmung im Bereich der Armatur einer
Leitung oder dergleichen,

Fig. 9    eine Stirnansicht einer erfindungsgemäßen
Mineralfaserdämmschale in einer ersten Ausführungsform,

Fig. 10    ein Anwendungsbeispiel für die Mineralfaserdämmschale in Fig. 9 gemäß Schnitt X-X,

Fig. 11    ein anderes Anwendungsbeispiel für die Mineralfaserdämmschale in Fig. 9 gemäß Schnitt
XI-XI in einer Fig. 10 entsprechenden Darstellung,

Fig. 12    eine Stirnansicht einer erfindungsgemäßen
Mineralfaserdämmschale in einer zweiten
Ausführungsform,

Fig. 13    in einer Fig. 12 entsprechenden Darstellung
die Mineralfaserdämmschale gemäß Fig. 12
nach dem Einbau,

Fig. 14    in einer Stirnansicht eine erfindungsgemäße Mineralfaserdämmschale in einer dritten
Ausführungsform,

Fig. 15    in einer Fig. 14 entsprechenden Darstellung
die Mineralfaserdämmschale gemäß Fig. 14
im eingebauten Zustand,

Fig. 16    eine Stirnansicht einer erfindungsgemäßen
Mineralfaserdämmschale in einer vierten
Ausführungsform,

Fig. 17    in einer Fig. 16 entsprechenden Darstellung
die Mineralfaserdämmschale gemäß Fig. 16
im Einbauzustand,

Fig. 18          eine Stirnansicht einer erfindungsgemäßen
                 Mineralfaserdämmschale in einer fünften
                 Ausführungsform,

Fig. 19          in einer Fig. 18 entsprechenden Darstellung die Mineralfaserdämmschale gemäß Fig.
                 18 nach einem ersten Schritt ihrer bestimmungsgemäßen Verformung und

Fig. 20          in einer den Fig. 18 und 19 entsprechenden
                 Darstellung die Mineralfaserdämmschale gemäß Fig. 18 in ihrem Einbauzustand.

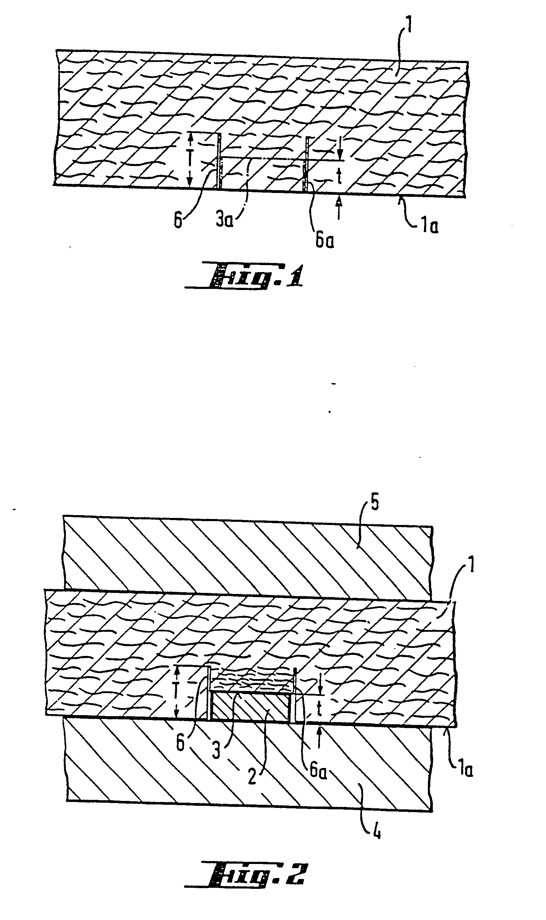

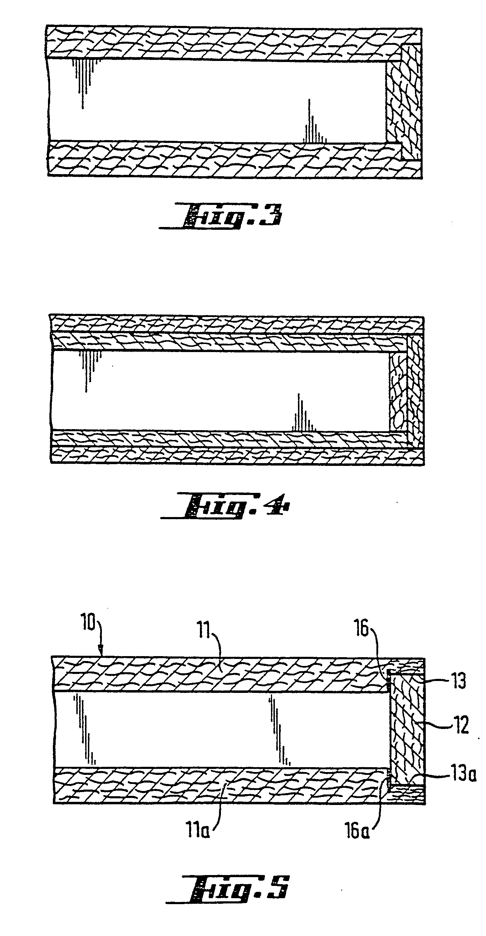

Ein mit 1 bezeichneter Mineralfaserdämmkörper gemäß
Fig. 1 möge im Beispielsfalle in der Konsistenz einer
relativ formstabilen Platte vorliegen. Wie aus der Veranschaulichung der Einbaustellung in Fig. 2 ersichtlich
ist, soll der Mineralfaserdämmkörper 1 in seiner Einbaustellung ein Bauteil 2 im Beispielsfalle in Form einer Schwelle in einer Vertiefung 3 aufnehmen. Die
Schwelle ist an einer der beiden mit 4 und 5 bezeichneten starren Begrenzungswänden vorgesehen, zwischen denen der Mineralfaserdämmkörper 1 eingebracht werden
soll.

Hierzu wäre es an sich erforderlich, die Vertiefung 3
beispielsweise durch einen Fräsvorgang in den Dämmkörper 1 einzuschneiden, wie dies bei 3a in Fig. 1 strichpunktiert angedeutet ist. Es liegt auf der Hand, daß
dies ein relativ arbeits- und abfallintensiver Vorgang
ist. Erfindungsgemäß wird im Randbereich der Vertiefung
3 je ein Einschnitt 6 und 6a in die Oberfläche des
Dämmkörpers 1 eingebracht, was entweder durch Stanzen
im Zuge der Herstellung oder Konfektionierung, oder
aber bei Bedarf auch nachträglich mittels eines geeigneten Schneidwerkzeuges wie eines Messers oder eines
Fuchsschwanzes erfolgen kann. Im Beispielsfalle übersteigt die Einschnittiefe T jedes Einschnitts 6 und 6a die vorgesehne Tiefe t der Vertiefung 3, die wiederum der Höhe der das aufzunehmende Bauteil 2 bildenden Schwelle entspricht. Wie aus Fig. 2 ohne weiteres ersichtlich ist, wird dadurch zwischen den Einschnitten 6 und 6a beim Einbau des Dämmkörpers 1 zwischen die starren Begrenzungswände 4 und 5 das Mineralfasermaterial an der Vorderseite des Bauteils 2 komprimiert, so daß das Bauteil 2 unter Bildung der Vertiefung 3 in das Mineralfasermaterial eindringen kann. Durch die beidseitigen Schnitte 6 und 6a ist jegliche Störung des benachbarten Materials hierdurch vermieden. Weiterhin setzt das Mineralfasermaterial im Grund der Vertiefung 3 dem Eindringen des Bauteils 2 nur begrenzten Widerstand entgegen, da es sich unabhängig von den seitlich benachbarten Mineralfasern bewegen kann. Dadurch, daß die Einschnitte 6 und 6a in einer die Tiefe t der Vertiefung 3 übersteigenden Tiefe T eingebracht sind, reichen die Einschnitte 6 und 6a bis in einen im Abstand vom Boden der Vertiefung 3 liegenden Materialbereich, in dem die Kompression nur noch geringfügig wirksam ist, so daß die dortige seitliche Verbindung zu den umgebenden Mineralfasern infolge der vorliegenden Verfilzung und des Bindemittels unschädlich ist. Da das Mineralfasermaterial im Grund der Vertiefung 3 rückzufedern sucht, wird zugleich der Dämmkörper 1 mit vorbestimmtem Druck satt an die gegenüberliegende Begrenzungswand 5 angedrückt.

Für den Fall, daß der Mineralfaserdämmkörper 1 zur Aufnahme des Bauteils 2 durch Einbringen der Einschnitte 6 und 6a bereits vorbereitet ist, tatsächlich an der Einbaustellung jedoch das Bauteil 2 in einem Einzelfall nicht vorliegt, ergeben sich keinerlei funktionellen Nachteile; denn dann liegt der Mineralfaserdämmkörper 1 in der aus Fig. 1 ersichtlichen Konfiguration zwischen den Begrenzungswänden 4 und 5 und steht somit über seine ganze Fläche ohne Dämmfähigkeitsverlust zur Verfügung. Auch bei Kompression des Mineralfasermaterials durch das Bauteil 2 unter Ausbildung einer entsprechenden Vertiefung 3 leidet die Wärme- oder auch Schalldämmfähigkeit des Mineralfasermaterials im Bereich des Bauteils 2 nicht oder nicht merklich, da mit der Bildung der Vertiefung keinerlei Materialverlust verbunden ist.

Platten- oder bahnförmige Mineralfaserdämmkörper 1 aus mit Bindemittel gebundenen Mineralfasern werden in der Regel auf kontinuierlichen Produktionsbahnen derart hergestellt, daß die Mineralfasern nach ihrer Erzeugung auf der Bahn abgelegt und anschließend an von der Bahn durchlaufenen Arbeitsstationen weiteren Einwirkungen wie Verdichtungen, Erwärmungen, Schnitten usw. unterworfen werden. Dabei stellt sich eine Orientierungshauptrichtung der Fasern ein, die im wesentlichen parallel zur Stützfläche der Produktionsbahn und in gewissem Umfange auch in Produktionsrichtung liegt, so daß die Fasern zu einem Großteil annähernd oberflächenparallel liegen. Bei Einbringen der Einschnitte 6 und 6a in der veranschaulichten Weise von der mit 1a bezeichneten Materialoberfläche nach innen und entsprechender Kompression in dieser Richtung werden somit überwiegend nur gegenseitige Abstände der Fasern geändert, nicht aber die Fasern in ihrer Längsrichtung auf Knickung belastet und gebrochen, so daß sich neben einer allenfalls geringen Beeinträchtigung der Dämmwirkung ein verminderter Kraftaufwand für die Kompression und ein häufig erwünschter guter Rückfederungseffekt ergeben.

In den Fig. 3 bis 5 ist ein spezieller Anwendungsfall der Erfindung zur Herstellung eines Verbundbauteils 10 veranschaulicht, wie es beispielsweise zur Wärmedämmung von Wärmespeichergeräten verwendet wird. Das in Fig. 5 veranschaulichte erfindungsgemäße Verbundbauteil besteht aus zwei plattenförmigen Mineralfaserdämmkörpern 11 und 11a, die zu beiden Seiten eines nicht näher dargestellten Wärmespeichers liegen und stirnseitig durch ein Bauteil 12 verbunden sind, welches wiederum ein Mineralfaserdämmkörper ist.

Zur Verdeutlichung der Problematik sind in den Fig. 3 und 4 die bisherigen Entwicklungsstufen für ein solches Verbundbauteil veranschaulicht. Ein Problem besteht dabei darin, daß zur Erzielung der erforderlichen Dichtheit bei den auftretenden Maßtoleranzen der Mineralfaserplatten in den Anschlußbereichen auf eine Stufenfalzverbindung zurückgegriffen werden muß. Diese kann in der aus Fig. 3 ersichtlichen Weise natürlich einfach dadurch hergestellt werden, daß die aneinander anliegenden Seitenränder der Mineralfaserplatten, wie dies auch für andere Materialien in einem solchen Stoßbereich bekannt ist, beispielsweise durch Fräsen mit Stufen versehen werden. Zur Vermeidung derartiger Bearbeitungen ist man sodann zu der aus Fig. 4 ersichtlichen Lösung übergegangen, bei der die einzelnen Dämmschichten zweilagig ausgeführt werden und so ohne Fräsbearbeitungen oder dergleichen durch entsprechende, aus Fig. 4 ersichtliche gegenseitige Anordnung der einzelnen Lagen eine stufenfalzartige Ausbildung erzielt wird. Dies führt jedoch wiederum zu ungleichen Formaten für die Platten der einzelnen Lagen und von daher zu gewissem Aufwand, wobei darüber hinaus besonders dünne Lagen aus Mineralfasern in der laufenden Produktion durch eine entsprechende Erhöhung der Laufgeschwindigkeit des Produktionsbandes erzeugt werden müssen, was wiederum anderweitige Nachteile etwa durch verminderte Taktzeiten für Bearbeitungen usw. mit sich bringt.

Wie aus Fig. 5 ersichtlich ist, läßt sich die geschilderte Problematik im Rahmen der Erfindung ganz einfach dadurch lösen, daß in die Mineralfaserdämmkörper 11 und 11a Einschnitte 16 und 16a in der aus Fig. 5 ersichtlichen Weise eingebracht werden, in denen das dortige Wärmedämmaterial zur Bildung von Vertiefungen 13 und 13a ohne Störung benachbarter Materialanteile komprimierbar ist. Zwischen die so durch ein geeignetes Werkzeug gebildeten Vertiefungen 13 und 13a wird dann ganz einfach das Bauteil 12 in Form der Stirnplatte eingeschoben und unter Bildung eines definierten Stufenfalzes bei Rückfederung des komprimierten Materials im Bereich der Vertiefungen 13 und 13a federnd eingespannt Die Mineralfaserplatten zur Bildung der Mineralfaserdämmkörper 11 und 11a sowie des Bauteils 12 können übliche Dicke und gleichbleibende Formate besitzen; es ist lediglich die Einbringung der Einschnitte 16 und 16a nach den im Zusammenhang mit den Fig. 1 und 2 erläuterten Prinzipien erforderlich, um ein erfindungsgemäßes Verbundbauteil 10 zu erhalten.

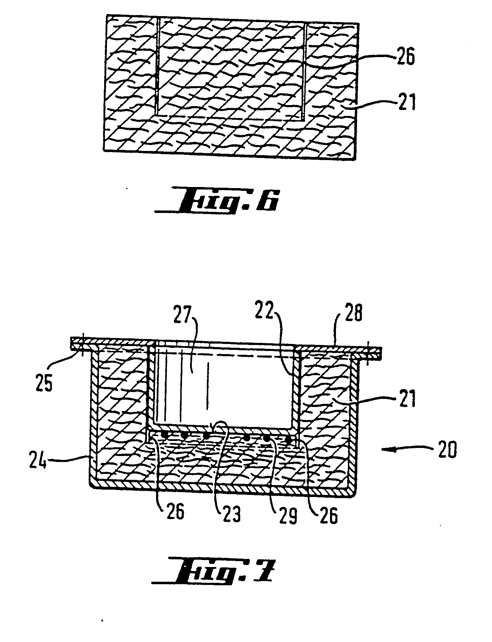

In den Fig. 6 und 7 ist als weiterer Anwendungsfall der Erfindung die Bildung eines topfförmigen Teiles 20 veranschaulicht, wie dies speziell aus Fig. 7 ersichtlich ist. Hierzu wird zunächst ein Mineralfaserdämmkörper 21 zur Verfügung gestellt, in den ein ringförmiger Einschnitt 26 eingebracht wird, wie dies aus Fig. 6 ersichtlich ist. Der Wärmedämmkörper 21 wird sodann im Beispielsfalle in ein Gehäuse 24 eingesetzt, welches die Außenseiten des topfförmigen Teiles 20 abdeckt und im Beispielsfalle in oberen Randflanschen 25 endet. Sodann wird als Bauteil 22 eine der Kontur der Topfausnehmung 27 entsprechenden Schale mit einem etwa dem Durchmesser des ringförmigen Einschnittes 26 entsprechenden Außendurchmesser von oben her aufgesetzt und unter Kompression des Mineralfasermaterials im Bereich innerhalb des ringförmigen Einschnitts 26 in den Mineralfaserdämmkörper 21 eingedrückt, so daß eine Vertiefung 23 gebildet wird. Die ringförmige Oberfläche ausserhalb des ringförmigen Einschnitts 26 wird durch einen oberen Ringflansch 28 des schalenförmigen Bauteils 22 überdeckt, so daß das Bauteil 22 am Gehäuse 24 bzw. an dessen Flansch 25 befestigt werden kann, das Gehäuse 24 also als Gegenhalter für das Bauteil 22 dient.

Auf diese Weise wird vermieden, daß das Bauteil 22 nach Druckentlastung wieder aus dem Mineralfaserdämmkörper 21 herausgedrückt wird. Im Beispielsfalle ist am Boden des schalenförmigen Bauteils 22 eine elektrische Heizwicklung 29 angeordnet, die zur Beheizung eines in der Topfausnehmung 27 anzuordnenden Mediums dienen kann. Auch hier wirkt sich die Verdichtung des im Beispielsfalle in Filzkonsistenz vorliegenden Mineralfasermaterials am Boden der Vertiefung 23 vorteilhaft aus.

Sofern eine gegenseitige unmittelbare Berührung des oberen Ringflansches 28 mit dem Randflansch 25 vermieden werden soll, kann in nicht näher dargestellter Weise auch dort komprimiertes Mineralfasermaterial ganz einfach dadurch zwischengeschaltet werden, daß der Mineralfaserdämmkörper 21 im Bereich seiner aus Fig. 6 ersichtlichen Umfangsfläche einen von unten her geführten Einschnitt erhält, im übrigen aber einen dem Randflansch 25 oder dem Ringflansch 28 entsprechenden Außendurchmesser besitzt. Beim Zusammenführen des schalenförmigen Bauteils 22 mit dem Gehäuse 24 nimmt dann der Randflansch 25 das Mineralfasermaterial radial außerhalb dieses zusätzlichen Einschnittes von unten her mit, wobei dessen Kompression zwischen dem Randflansch 25 und dem oberen Ringflansch 28 bis auf ein gewünschtes Maß erfolgt, während gleichzeitig das schalenförmige Bauteil 22 in der veranschaulichten Weise im Bereich radial innerhalb des Einschnittes 26 in den Mineralfaserdämmkörper 21 eindringt.

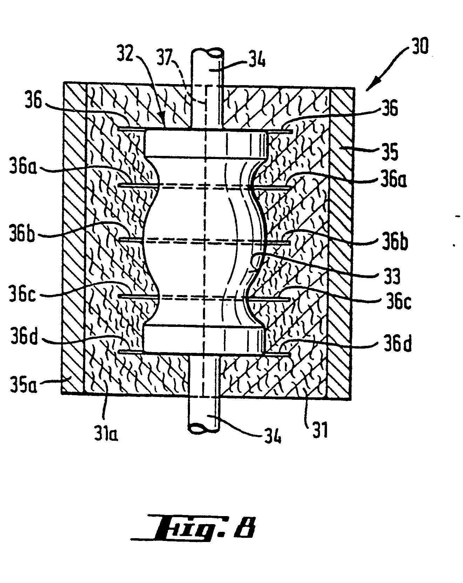

Bei der Ausführungsform gemäß Fig. 8 soll eine Leitung 34 mit einer Dämmung 30 in einem Bereich versehen werden, in dem eine Armatur 32 oder dergleichen mit gegenüber der Leitung 34 unterschiedlichem Durchmesser vorgesehen ist. Zu beiden Seiten der veranschaulichten Dämmung 30 ist die Leitung 34 in nicht näher dargestellter, üblicher Weise durch Rohrdämmschalen gedämmt, die in einer inneren Durchtrittsöffnung das Rohr der Leitung 34 aufnehmen.

Zur Schaffung der Dämmung 30 im Bereich der Armatur 32 werden von beiden Seiten her Mineralfaserdämmkörper 31 und 31a an die Armatur 32 angelegt, bis das Platten- oder filzartige Mineralfasermaterial der Mineralfaserdämmkörper 31 und 31a sich neben der Armatur 32, diese abdeckend, in einer Fuge 37 berührt. Jeder Mineralfaserdämmkörper 31 und 31a ist an seiner der Armatur 32 abgewandten Seite mit einer starren Abdeckplatte 35 bzw. 35a versehen, die das jeweilige Mineralfasermaterial unterstützt, wobei auf die Außenseiten der Abdeckplatten 35 und 35a in nicht näher dargestellter Weise Druck ausgeübt und durch eine geeignete Vorrichtung aufrecht erhalten wird, um die Fuge 37 geschlossen zu halten.

An der der Armatur 32 zugewandten Seite jedes Mineralfaserdämmkörpers 31 bzw. 31a sind in der veranschaulichten Weise quer zur Achse der Leitung 34 verlaufende radiale Einschnitte 36, 36a, 36b, 36c und 36d vorgesehen, die im Beispielsfalle konstante gegenseitige Abstände besitzen und im wesentlichen unabhängig von der konkreten Form der Armatur 32 vorgefertigt sind. Sofern die Armatur 32 wie im dargestellten Beispielsfalle keine zu extrem vorspringenden Bereiche aufweist, ist die Lage der Einschnitte 36a, 36b und 36c im axialen Bereich der Armatur 32 unkritisch, da hier in jedem Falle eine entsprechende elastische Anpassung des Bodens der mit 33 bezeichneten Vertiefung erfolgen kann, insbesondere, wenn wie im vorliegenden Fall ein Mineralfasermaterial in Filzkonsistenz verwendet wird. Vor allem für schwierigere oder extremere Formen einer solchen Armatur 32 oder eines entsprechenden aufzunehmenden Bauteils können natürlich auch die Einschnitte 36 bis 36d speziell der Form des jeweiligen Bauteils unter den vorstehend erläuterten Gesichtspunkten angepaßt werden. Eine besonders einfache Lagerhaltung ergibt sich jedoch, wenn eine Reihe von Wärmedämmkörpern 31, 31a zur Verfügung gestellt wird, die bestimmte, für viele Fälle relativ gut passende Muster von Einschnitten 36 aufweisen, also etwa in der veranschaulichten Weise eine Reihe von mit konstanten Abständen angeordneten Einschnitten 36, 36a, 36b, 36c und 36d, so daß derartige Dämmkörper 31 ohne allzu große Probleme für eine Vielzahl unterschiedlicher geeigneter Formen verwendet werden können. Im Falle einer Einbringung entsprechender Einschnitte durch Stanzen im Mineralfaserdämmkörper 31 oder 31a kann ein solches Muster von Einschnitten auch gitterförmig ausgebildet sein, mit entsprechenden gegenseitigen Abständen der Einschnitte in Anpassung an die voraussichtlichen Verformungsbedürfnisse. Dort, wo keine Verformung erforderlich ist, da kein Bauteil aufgenommen werden muß oder keine Unregelmäßigkeit der zu dämmenden Fläche auftritt, wirkt der Dämmkörper ohne funktionelle Einbußen, da kein Material abgenommen ist und somit die Dämmfunktion in vollem Umfange erfüllt werden kann.

Anhand der gemäß Fig. 8 verwendeten Mineralfaserdämmkörper in Form ebener Platten wird somit das Prinzip deutlich, durch entsprechende Wahl von Einschnitten 36 die zur Bildung einer Vertiefung 33 ausersehenen Oberflächenbereiche in voneinander getrennte Felder aufzuteilen und so zur Aufnahme von vorspringenden Flächenbereichen der zu dämmenden Fläche ohne weitere Zusatzmaßnahmen unter selbsttätiger Formanpassung geeignet zu machen. Durch Zusammenwirken mehrerer plattenförmiger Mineralfaserdämmkörper 31 und 31a lassen sich auf diese Weise praktisch beliebige räumliche Gebilde vollständig in Mineralfasermaterial einbetten und so wirkungsvoll dämmen. Insbesondere dann, wenn rotationssymmetrische Körper mit in Achsrichtung nicht allzu extremen Durchmesseränderungen wie etwa Leitungen 34 mit nur wulstförmigen Verdickungen oder dergleichen vorliegen, dann kann jedoch auch eine entsprechende Dämmung im Rahmen der Erfindung durch Mineralfaserschalen erfolgen, so

daß auf Dämmkonstruktionen aus ebenen Mineralfaserdämmkörpern 31 und 31a nicht zurückgegriffen werden muß. Dies sei nachfolgend näher erläutert.

Hierzu ist in Fig. 9 eine Mineralfaserdämmschale 40 in einer Stirnansicht veranschaulicht, die zunächst in der üblichen Weise als Rohrdämm-Vollschale ausgebildet ist. Eine solche Mineralfaserdämmschale wird durch Wicklung von mit Bindemittel versehenen Mineralfasern auf einem Dorn hergestellt, der nach seiner Entfernung die übli-che Durchtrittsöffnung 41 für das zu dämmende Rohr bil-det. Um ein Aufbringen der Mineralfaserdämmschale 40 auf das zu dämmende Rohr von der Seite her zu ermöglichen, ist diese mit einem die volle Wandstärke durchsetzenden radialen Schlitz 47 versehen, der auf der gegenüberliegenden Seite der Durchtrittsöffnung 41 in einem Einschnitt 47a fortgesetzt ist, um dort ein Klaffen des Materials zu ermöglichen, wenn der Schlitz 47 für die Einführung des zu dämmenden Rohres geöffnet wird. Der Schlitz 47 und der Einschnitt 47a erzeugen somit gewissermaßen zwei Halbschalen, die jedoch im Grund des Einschnittes 47a noch bleibend, jedoch beweglich miteinander verbunden sind.

Wie ohne weiteres ersichtlich ist, liegt die Durchtrittsöffnung 41 bei Schließen des Schlitzes 47 in einem genau definierten, dem Wickeldorn zur Herstellung entsprechenden Durchmesser vor, wobei die Mineralfasern in Umfangsrichtung der Durchtrittsöffnung 41 angeordnet sind. Damit kann mit der Mineralfaserdämmschale 40 ausschließlich ein Rohr mit einem Außendurchmesser gedämmt werden, der praktisch genau dem Durchmesser der Durchtrittsöffnung 41 entspricht; bei einem zu großen Rohr könnte der Schlitz 47 nicht geschlossen werden, während bei einem zu kleinen Rohr keine umfangsseitige Anlage des Mineralfasermaterials gewährleistet wäre. Dies hat zur Folge, daß praktisch für jeden auftretenden Rohrdurchmesser eine Dämmschale 40 mit einem entsprechenden Durchmesser der Durchtrittsöffnung 41 zur Verfüfung gestellt werden muß, zuzüglich einiger weiterer Dämmschalengrößen mit gleichem Durchmesser der Durchtrittsöffnung 41, jedoch unterschiedlicher Dämmdicke je nach Wunsch des Benutzers. Hierdurch ergibt sich eine außerordentlich hohe Anzahl von vorzufertigenden und auf Lager zu haltenden Dämmschalen 40. Weiterhin ist jede Dämmschale 40 ausschließlich zur Dämmung eines ungestörten geraden Abschnittes eines solchen Rohres zu verwenden.

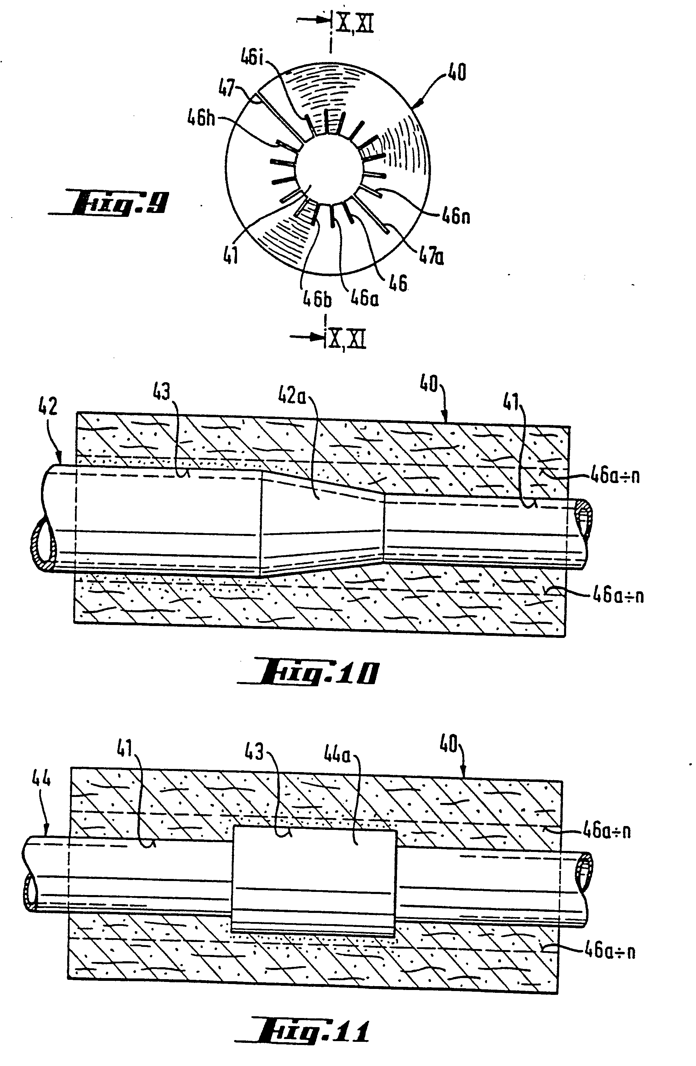

Erfindungsgemäß können nun in der aus Fig. 9 ersichtlichen Weise am Innenumfang der Durchtrittsöffnung 41 radiale Einschnitte 46, 46a bis 46n eingebracht werden, welche die dort in Umfangsrichtung vorliegenden Fasern durchtrennen und in einzelne, untereinander nicht verbundene Felder aufteilen. Hierdurch kann der Innenumfang der Durchtrittsöffnung 41 in selektiven Bereichen oder insgesamt als Lagervertiefung 43 genutzt werden, wie dieses in Fig. 10 und 11 ersichtlich ist, so daß auch glatte Rohrleitungen mit Übergröße des Rohrdurchmessers noch problemlos aufgenommen werden können und insbesondere Unstetigkeiten ohne Probleme mitgedämmt werden können.

Hierzu ist aus Fig. 10 ein Einsatzfall ersichtlich, bei dem eine Rohrleitung 42 mittels eines konischen Übergangsstückes 42a mit verändertem Durchmesser weitergeführt ist. Die parallel zur Rohrachse verlaufenden Einschnitte 46, 46a.... 46n ermöglichen eine Kompression des Mineralfasermaterials am Innenumfang der Durchtrittsöffnung 41 zur Anpassung an den sich vergrößernden Durchmesser des Rohres im Bereich des Übergangsstückes 42a sowie des folgenden größeren Rohrdurchmessers. Dabei ist natürlich eine Dämmschale 40 zu wählen, deren Durchtrittsöffnung 41 einen Durchmesser aufweist, der höchstens dem geringsten auftretenden Rohrdurchmesser entspricht, so daß dieser noch in Anlage umfaßt wird und größere Rohrdurchmesser durch entsprechende Kompression aufgenommen werden.

Gemäß Fig. 11 ist in einer Leitung 44 eine Rohrmuffenverbindung als aufzunehmendes Bauteil 44a eingesetzt. Wie aus Fig. 11 ersichtlich ist, wird diese ebenso wie das Übergangsstück 42a problemlos durch lokale Kompression des Dämmmaterials am Innenumfang der Durchtriitsöffnung 41 aufgenommen und so eine Vertiefung 43 gebildet.

Eine andere Form der erfindungsgemäßen Anpassung einer Rohrdämmschale 50 ist in den Fig. 12 und 13 veranschaulicht. Die Rohrdämmschale 50 besitzt wiederum einen durchgehenden Schlitz 57 und einen gegenüberliegenden Einschnitt 57a zur Erleichterung der Aufklappbewegung. Der Einschnitt 57a wird hier ebenso wie der Schlitz 57 im Sinne eines erfindungsgemäßen Einschnittes genutzt, und es werden überdies zwei weitere Einschnitte 56 und 56a jeweils im Winkel von 90 Grad zum Schlitz 57 bzw. zum Einschnitt 57a eingebracht. Auf diese Weise ist die Dämmschale 50 in der aus Fig. 13 ersichtlichen Weise zur Aufnahme eines Rohres mit Viereckquerschnitt als Bauteil 52 geeignet, wobei jede der Ecken des Rohres an einem der Einschnitte oder Schlitze 56, 56a, 57, 57a zu liegen kommt und die Flachseiten des Bauteils 52 zwischen den Ecken das Mineralfasermaterial zwischen den Einschnitten oder Schlitzen 56, 56a, 57, 57a entsprechend komprimierten. Selbstverständlich wäre es auch möglich, den Schlitz 57 sowie den gegenüberliegenden Einschnitt 57a, im Beispielsfalle um 45 Grad versetzt, an eine der Flachseiten des Bauteils 52 anschließen zu lassen und im Eckbereich jeweils einen eigenen Einschnitt 56, 56a vorzusehen. Die veranschaulichte Ausführungsform erleichtert jedoch überdies das Zuklappen der Dämmschale 50 zur Schließung des Schlitzes 57 nach dem Aufstülpen auf das das Bauteil 52 bildende Viereckrohr. Mit 53 ist hier wiederum die durch Kompression gebildete Lagervertiefung bezeichnet.

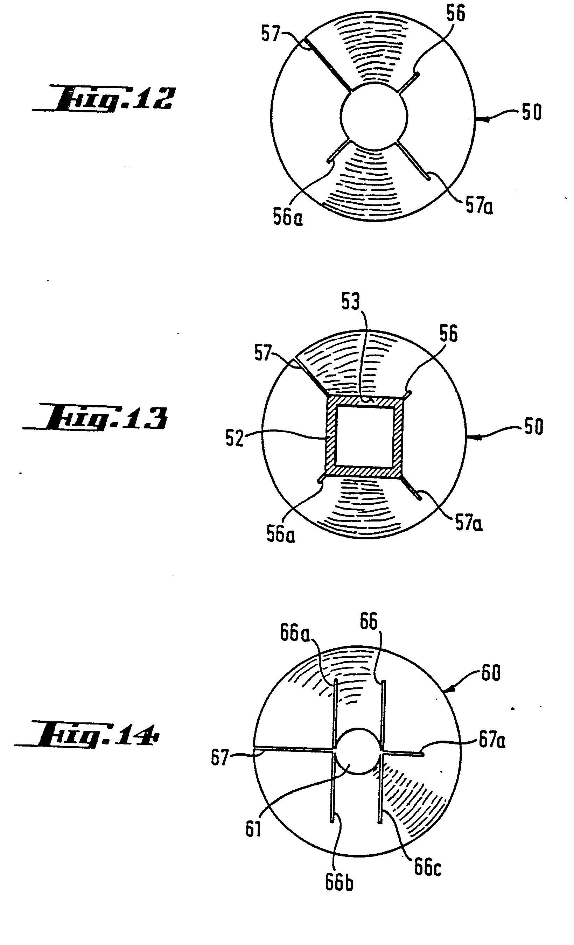

Bei dem in den Fig. 14 und 15 veranschaulichten Beispielsfalle soll eine Mineralfaserdämmschale 60 ein Bauteil 62 aufnehmen, welches nicht als ein Rohr, sondern
als ein Bündel von zwei Rohren ausgebildet ist. Hierzu
weist die Mineralfaserschale 60 wiederum einen Schlitz
67 mit gegenüberliegendem Einschnitt 67a, zusätzlich
jedoch im Beispielsfalle senkrecht hierzu und tangential zur Durchtrittsöffnung 61 angeordnete erfindungsgemäße Einschnitte 66, 66a, 66b und 66c auf, wie dies aus
Fig. 14 im einzelnen ersichtlich ist. Das Mineralfasermaterial zwischen den Einschnitten 66 und 66a einerseits
sowie 66b und 66c andererseits ist dadurch unabhängig
vom Umgebungsmaterial radial komprimierbar. Auf diese
Weise können die beiden Rohre des Bauteils 62 in der aus
Fig. 15 ersichtlichen Weise aufgenommen werden, wobei
sich durch Kompression eine entsprechende Vertiefung
63 zwischen den Einschnitten 66, 66a sowie 66b und 66c
ausbildet.

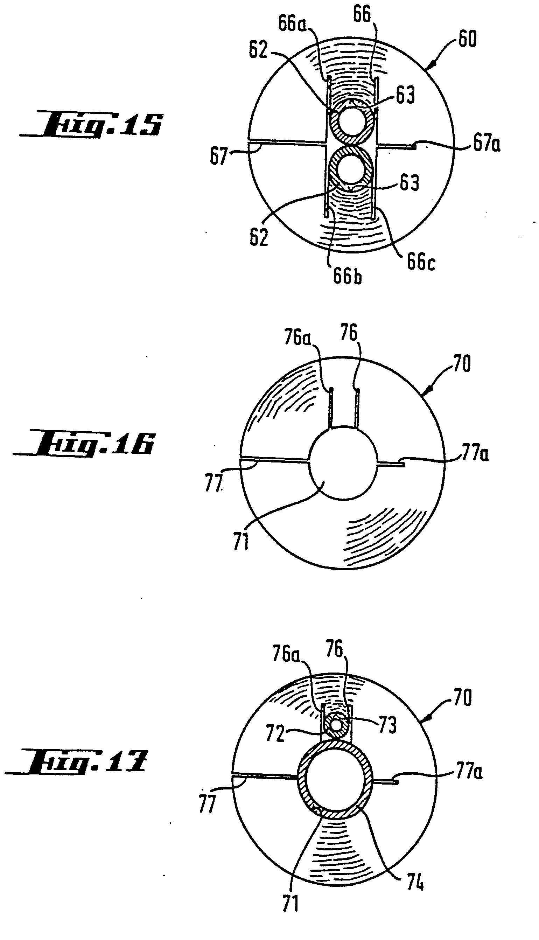

Bei der Ausführungsform gemäß den Fig. 16 und 17 ist eine Mineralfaserdämmschale 70 vorgesehen, die wiederum
einen Schlitz 77 sowie einen diesem gegenüberliegenden
Einschnitt 77a aufweist. Quer zur Ebene des Schlitzes
77 sind hier in der erfindugsgemäßen Weise zwei Einschnitte 76 und 76a eingebracht, die geringeren gegenseitigen Abstand besitzen als es dem Durchmesser der
Durchtrittsöffnung 71 entspricht. Wie aus Fig. 17 ersichtlich ist, soll hier in der Durchtrittsöffnung 71
ohne Verformungen ein Rohr 74 aufgenommen werden, an
dem ein im Durchmesser kleinerer Rohrheizkörper als zusätzlich aufzunehmendes Bauteil 72 angesetzt ist. Der
Abstand zwischen den Einschnitten 76 und 76a entspricht
im wesentlichen dem Durchmesser des als Rohrheizkörper
ausgebildeten Bauteils 72, so daß dieses zwischen die
Einschnitte 76 und 76a eintreten kann und das dortige Material unter Bildung einer Vertiefung 73 komprimieren kann.

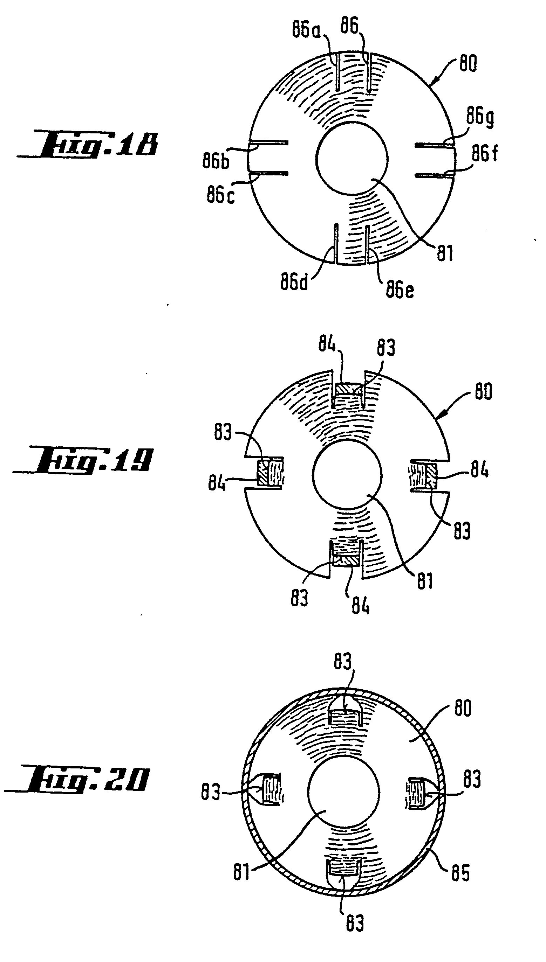

In den Fig. 18 bis 20 schließlich ist ein Mineralfaserdämmkörper 80 veranschaulicht, der im Beispielsfalle ungeschlitzt ausgebildet ist und lediglich eine innere Durchtrittsöffnung 81 besitzt, die umfangsseitig geschlossen ist. Während bei den zuvor erläuterten Ausführungsformen stets die Bildung einer Vertiefung 43, 53, 63 und 73 vom Innenumfang der Durchtrittsöffnung der jeweiligen Dämmschale radial nach außen vorgesehen ist, veranschaulicht die vorliegende Ausführungsform gemäß den Fig. 18 bis 20 die entsprechende Möglichkeit der Bildung von Vertiefungen 83 radial von außen nach innen in der Außenumfangsfläche der Dämmschale 80. Hierzu sind je paarweise angeordnete Einschnitte 86, 86a bzw. 86b und 86c bzw. 86d und 86e bzw. 86f und 86g vorgesehen, die vom Außenumfang der Dämmschale 80 radial nach innen geführt sind und im Beispielsfalle in einem Winkelabstand von 90 Grad liegen. Das Material zwischen den Schlitzen 86 kann, wie in Fig. 19 in schematisch gezeigt ist, durch geeignete Druckwerkzeuge 84 zur Bildung der Vertiefungen 83 radial nach innen komprimiert werden. Sodann kann in der aus Fig. 20 ersichtlichen Weise der Außenumfang der Mineralfaserdämmschale 80 mit einem Spannmantel 85 umgeben und so in seinem Durchmesser verringert werden, wobei unter dem Druck des Spannmantels 85 Mineralfasermaterial aus den Stegbereichen zwischen den Vertiefungen 83 in die Vertiefungen 83 hinein verdrängt werden kann. Auf diese Weise kann die Mineralfaserdämmschale 80 in ihrem Außenumfang vermindert werden, wobei bei Abnahme des Spannmantels 85 eine Rückfederung erfolgt und wieder im wesentlichen der ursprüngliche Umfang der Mineralfaserdämmschale 80 wiederhergestellt wird.

Durch Verminderung des Außendurchmessers der Mineralfaserdämmschale 80 mittels eines solchen Spannmantels 85 kann beispielsweise eine solche Dämmschale preß in nur vom Innenraum her zugängliche Einbaukörper wie Kamine oder dergleichen eingebaut werden. Hierzu wird zunächst der Außendurchmesser mittels des Spannmantels 85 verringert und erfolgt so ein widerstandsarmes Einschieben, während sodann der Spannmantel 85 aufgetrennt oder sonstwie entfernt werden kann und die Mineralfaserdämmschale 80 entsprechend zurückfedert. Hierbei paßt sich die Mineralfaserdämmschale 80 auch unregelmäßigen Innenkonturen des aufnehmenden Bauteils an, wozu zusätzlich auf die verbesserte Anpassungsfähigkeit durch die Einschnitte 86 zurückgegriffen werden kann. Auch nach innen ragende Vorsprünge oder dergleichen des Einbaukörpers wie etwa eine am Innenumfang geführte Rohrleitung oder dergleichen können so sauber aufgenommen werden.

Grünzweig + Hartmann und Glasfaser AG, 6700 Ludwigshafen

Patentansprüche

1. Mineralfaserdämmkörper, insbesondere Formteil, aus mit Bindemittel gebundenen Mineralfasern in Filz- oder Plattenkonsistenz oder in Schalenform, der insbesondere zur Aufnahme eines daran zu lagernden Bauteils mit wenigstens einer Vertiefung zu versehen ist, dadurch gekennzeichnet, daß die zu erzeugende Vertiefung (3; 13, 13a; 23; 33; 43; 53; 63; 73; 83) durch wenigstens einen randseitigen Einschnitt (6, 6a; 16, 16a; 26; 36, 36a, 36b, 36c, 36d; 46, 46a bis 46n; 56, 56a; 66, 66a, 66b, 66c; 76, 76a; 86, 86a, 86b, 86c, 86d, 86e, 86f, 86g) in das Mineralfasermaterial begrenzt ist, der von der Materialoberfläche aus bis wenigstens in die ungefähre Tiefe (t) der zu erzeugenden Vertiefung geführt ist, und daß die Vertiefung durch Kompression des Mineralfasermaterials innerhalb der Einschnittbegrenzung durch Druckbelastung erzeugbar ist.

2. Mineralfaserdämmkörper nach Anspruch 1, dadurch gekennzeichnet, daß der Einschnitt (6, 6a; 16, 16a; 26; 36, 36a, 36b, 36c, 36d; 46, 46a bis 46n; 56, 56a; 66, 66a, 66b, 66c; 76, 76a; 86, 86a, 86b, 86c, 86d, 86e, 86f, 86g) quer zur Orientierungshauptrichtung der Fasern verläuft.

3. Mineralfaserdämmkörper nach Anspruch 1 oder 2; dadurch gekennzeichnet, daß der Einschnitt (6, 6a; 16, 16a; 26; 36, 36a, 36b, 36c, 36d; 46, 46a bis 46n; 56, 56a; 66, 66a, 66b, 66c; 76, 76a; 86, 86a, 86b, 86c, 86d, 86e, 86f, 86g) bis in eine gegenüber der Tiefe (t) der zu erzeugenden Vertiefung (3; 13, 13a; 23; 33; 43; 53; 63; 73; 83) größere Tiefe (T) geführt ist.

2

4. Mineralfaserdämmkörper nach einem der Ansprüche 1 bis 3, dadurch gekennzeichnet, daß eine Mehrzahl von Einschnitten (36, 36a, 36b, 36c, 36d; 46, 46a bis 46n) in einem zur Dämmung einer Mehrzahl unterschiedlicher Bauteile (Armatur 32; Rohr 42, Übergangsstück 42a; Rohr 44, Rohrmuffenverbindung 44a) passenden, vorbestimmten Muster vorgesehen ist.

5. Topfförmiges Teil mit einem Mineralfaserdämmkörper nach einem der Ansprüche 1 bis 3, dadurch gekennzeichnet, daß als in der die Topfausnehmung (27) bildenden Vertiefung (23) zu lagerndes Bauteil (22) eine formstabile Schale vorzugsweise aus Blech oder Kunststoff vorgesehen ist.

6. Topfförmiges Teil nach Anspruch 5, dadurch gekennzeichnet, daß das schalenförmige Bauteil (22) in seiner eingedrückten Stellung an einem Gegenhalter (Gehäuse 24) vorzugsweise in Form eines Abdeckgehäuses gehalten ist, der die der Topfausnehmung (27) gegenüberliegende Außenwand des Mineralfaserdämmkörpers (21) übergreift.

7. Verbundbauteil mit einem Mineralfaserdämmkörper nach einem der Ansprüche 1 bis 4, dadurch gekennzeichnet, daß ein anderer Mineralfaserdämmkörper als zu lagerndes Bauteil (12) in die Vertiefung (13, 13a) eingedrückt ist.

8. Verbundbauteil nach Anspruch 7, dadurch gekennzeichnet, daß das zu lagernde Bauteil (12) als sich in Richtung des Einschnittes (16, 16a) erstreckende Platte ausgebildet ist.

9. Mineralfaserdämmschale aus einem Mineralfaserdämmkörper nach einem der Ansprüche 1 bis 4, dadurch gekennzeichnet, daß die Einschnitte (46, 46a bis 46n;

56, 56a; 66, 66a, 66b, 66c; 76, 76a; 86, 86a, 86b, 86c, 86d, 86e, 86f, 86g) parallel zur Längsachse der Durchtrittsöffnung (41; 51; 61; 71; 81) der Mineralfaserschale (40; 50; 60; 70; 80) geführt sind.

10. Mineralfaserdämmschale nach Anspruch 9, dadurch gekennzeichnet, daß zur Erzielung von radialer Kompressibilität größerer Flächenbereiche insbesondere am Innenumfang der Durchtrittsöffnung (41) der Mineralfaserschale (40) eine Mehrzahl von Seite an Seite angeordneten Einschnitten (46, 46a bis 46n) vorgesehen ist.

**Fig.1**

**Fig.2**

0104597

_Fig.3_

_Fig.4_

_Fig.5_

_Fig.6_

_Fig.7_

*Fig. 8*

0104597

Fig.9

Fig.10

Fig.11

0104597

*Fig.12*

*Fig.13*

*Fig.14*

**Fig.15**

**Fig.16**

**Fig.17**

0104597

**Fig.18**

**Fig.19**

**Fig.20**